# EUROPÄISCHE PATENTSCHRIFT

(11) **EP 0 867 385 B1**
(45) Veröffentlichungstag und Bekanntmachung des Hinweises auf die Patenterteilung: **12.12.2001**
(21) Anmeldenummer: 98104459.7
(22) Anmeldetag: 12.03.1998
(51) Int. Cl.: B65G 47/248

(54) **Anlage zum ausgerichteten Zuführen von Trapezstreifen aus Dämmaterial im Zuge der Fertigung von Sandwichelementen**
Apparatus for feeding insulating filler material during the production of sandwich board
Installation pour l'alimentation de bandes isolantes pendant la fabrication de panneaux sandwich

(30) Priorität: 26.03.1997 DE 19712696
(43) Veröffentlichungstag der Anmeldung: 30.09.1998
(73) Patentinhaber: Siempelkamp Handling Systeme GmbH & Co., 82515 Wolfratshausen (DE)
(72) Erfinder:
(74) Vertreter: Honke, Manfred, Dr.-Ing.

(56) Entgegenhaltungen:
- CH-A- 465 839
- FR-A- 2 161 320
- US-A- 2 784 831
- US-A- 3 554 353

## Beschreibung

Die Erfindung betrifft eine Anlage zum ausgerichteten Zuführen von Trapezstreifen aus Dämmaterial im Zuge der Fertigung von Sandwichelementen, insbesondere Wand- oder Deckenelementen, mit beidseitigen Deckschichten und einem Dämmaterialkern, wobei zumindest eine der beiden Deckschichten Trapezsicken zur Aufnahme der Trapezstreifen aufweist, mit einer Trapezsäge zum Teilen von Dämmaterialplatten in wechselweise mit ihrer Schmalseite nach unten und ihrer Schmalseite nach oben liegenden Trapezstreifen und mit einem Trapezstreifenförderer. - Bei den Sandwichelementen handelt es sich um Plattenelemente, deren Deckschichten regelmäßig als Metallplatten ausgeführt sind und deren Dämmaterialkern aus versetzt zueinander angeordneten Füllstreifen besteht. Bei dem Dämmaterial, aus dem auch die Füllstreifen bestehen, handelt es sich im allgemeinen um Mineralfaserwolle, Glasfaserwolle, geschäumten Kunststoff wie beispielsweise PU-Schaum oder dergleichen.

Im Zuge der Herstellung von Sandwichelementen, deren Deckschichten Trapezsicken aufweisen, müssen zunächst die Trapezsicken mit Trapezstreifen ausgelegt werden, um anschließend einen Dämmaterialkern aus Füllstreifen zwischen zwei Deckschichten einbringen zu können. Das Einlegen der Trapezstreifen in die Trapezsicken erfolgt im Handbetrieb. Dabei müssen zuvor die von einer Trapezsäge geschnittenen Trapezstreifen um 180° gewendet werden sofern die Trapezstreifen mit ihrer Schmalseite nach oben und folglich falsch liegen. Aber auch die mit ihrer Schmalseite nach unten und folglich richtig liegenden Trapezstreifen müssen manuell in die Trapezsicken eingelegt werden. Das alles ist außerordentlich personal- und zeitaufwendig. Hier will die Erfindung Abhilfe schaffen.

Der Erfindung liegt die Aufgabe zugrunde, eine Anlage zu schaffen, welche das ausgerichtete Zuführen von Trapezstreifen in betrieblicher und rationeller Weise auf automatischem Wege für eine kontinuierliche Fertigung von Sandwichelementen gewährleistet.

Diese Aufgabe löst die Erfindung dadurch, daß dem Trapezstreifenförderer ein taktweise antreibbarer Trommelwender mit nebeneinander angeordneten Trapezfächern mit wechselweise nach oben und unten ausgerichteten Trapezaufnahmen für die antransportierten Trapezstreifen nachgeordnet ist, wobei die Trapezaufnahmen in Trapezstreifenförderebene angeordnet sind und den Trapezfächern für die mit ihrer Schmalseite nach oben liegenden Trapezstreifen am Ausgang des um seine horizontale Längsachse rotierenden Trommelwenders ein Anschlag zugeordnet ist, und daß dem Trommelwender ein Rollenförderer mit Leitflächen zur Bildung von trapezförmigen Führungskanälen für die Trapezstreifen nachgeordnet ist, welche die von dem Trommelwender mit nach unten liegender Schmalseite ankommenden Trapezstreifen auf ein vorgegebenes Rastermaß auseinanderführen (oder zusammenführen). - Diese Maßnahmen der Erfindung haben zunächst einmal zur Folge, daß die von der Trapezsäge geschnittenen Trapezstreifen mit wechselweise oben liegender und unten liegender Schmalseite in den Trommelwender bzw. seine Trapezfächer einfahren können. Die mit ihrer Schmalseite nach unten und folglich richtig liegenden Trapezstreifen durchfahren den Trommelwender, während die mit ihrer Schmalseite nach oben und falsch liegenden Trapezstreifen von den Anschlägen zurückgehalten werden. Der Trommelwender dreht um 180°, so daß dann auch die in ihm verbliebenen Trapezstreifen mit der Schmalseite nach unten liegen und ausgeführt werden können. Der nachfolgende Rollenförderer sorgt für den Abtransport sämtlicher nunmehr richtig liegender Trapezstreifen in seinen Führungskanälen und zieht die Trapezstreifen auf ein vorgegebenes Rastermaß auseinander. Nachdem der Trommelwender entleert worden ist, kann erneut eine entsprechende Anzahl Trapezstreifen von der Trapezsäge dem Trommelwender zugeführt werden. Insoweit wird also ein maschinelles und funktionssicheres Wenden der nach dem Sägevorgang falsch liegenden Trapezstreifen und ein ausgerichtetes Abtransportieren erreicht.

In weiterer Ausgestaltung der Erfindung können die Führungskanäle bzw. deren Leitflächen des Rollenförderers breitenverstellbar sein und innenseitig Führungsleisten aufweisen, um einerseits die Führungskanäle auf das jeweilige Breitenmaß der Trapezstreifen einstellen zu können, andererseits eine möglichst reibungsarme Führung zu erreichen. Die Führungskanäle nehmen die auf den Förderrollen des Rollenförderers aufliegenden Trapezstreifen mit vorgegebenem Bewegungsspiel zwischen den Führungsleisten auf, so daß ein störungsfreier Abtransport der Trapezstreifen gewährleistet ist. Die Führungskanäle bzw. Leitflächen können an den Rollenförderer überbrückenden Traversen angeschlossen sein, wobei die Leitflächen bis auf einen vorgegebenen Abstand gegen die Förderrollen des Rollenförderers abgewinkelt sind, um eine hinreichende Zwangsführung für die Trapezstreifen zu erreichen.

Nach einem weiteren Vorschlag der Erfindung, dem selbständige Bedeutung zukommt, ist vorgesehen, daß dem Rollenförderer eine Winkelstation mit einem orthogonal zum Rollenförderer angeordneten Trogförderer nachgeordnet ist, daß unterhalb des Trogförderers ein Hubrollenförderer mit gegen die trapezförmigen und bodenfreien Tröge des Trogförderers anhebbaren Förderrollen angeordnet ist, und das Rastermaß der Führungskanäle am Ende des Rollenförderers durch die Trogabstände vorgegeben ist und dadurch eine Übergabe der Trapezstreifen aus den Führungskanälen in die entsprechende und taktweise vorgefahrene Anzahl der Tröge des Trogförderers erfolgt. Der Trogförderer sorgt folglich für den ausgerichteten Abtransport der Trapezstreifen, wobei die Tröge endseitig Anschläge zur Aufnahme der Trapezstreifen mit einer vorgegebenen Einschubtiefe aufweisen können. - Weiter sieht die Erfindung vor, daß am Ende des Trogförderers eine weitere Winkelstation mit einem unterhalb des Trogförderers angeordneten Hubrollenförderer vorgesehen ist, und daß der Hubrollenförderer die Trapezstreifen mit angehobenen Förderrollen aus dem oberhalb des Hubrollenförderers befindlichen Trögen des Trogförderers aushebt und an einen nachgeschalteten Rollenförderer mit breitenverstellbaren Leitflächen bzw. Führungskanälen abgibt. Insoweit wird also nach Lehre der Erfindung der Abtransport der ausgerichteten Trapezstreifen über zwei Winkelstationen erreicht. Dabei ist der zweite Rollenförderer wiederum orthogonal zum Trogförderer angeordnet und auch hier das Rastermaß der Führungskanäle durch die Trogabstände vorgegeben. Die Zwischenschaltung der Winkelstationen ermöglicht den Transport und das ausgerichtete Zusammenführen der Trapezstreifen auf verhältnismäßig engem Raum in eine Fertigungslinie, in welcher die Deckschichten mit Trapezsicken antransportiert werden, und zwar als gleichsam untere Deckschichten mit nach oben geöffneten Trapezsicken. In diesem Zusammenhang empfiehlt die Erfindung, daß sich an den Rollenförderer ein Einlegeförderer mit Einlegekanälen anschließt, deren Rastermaß am Ende des Einlegeförderers auf das Rastermaß der Trapezsicken der jeweiligen Deckschichten einstellbar ist und daß die Einlegekanäle mit einer Übergaberinne in die Trapezsicken der Deckschichten eintauchen, damit eine einwandfreie Übergabe der Trapezstreifen an die Trapezsicken gewährleistet ist und ein Aufkanten benachbarter Trapezstreifen in einem Trapezstreifenstrang ausgeschlossen ist. Um den Einlegevorgang zu erleichtern, ist zumindest der Einlegeförderer, ggf. aber auch der vorgeschaltete Riemenförderer, mit einem vorgegebenen Neigungswinkel gegen die unterhalb des Einlegeförderers in dessen Förderrichtung antransportierten Deckschichten geneigt. Die mit Trapezstreifen gefüllten Deckschichten durchlaufen vorzugsweise ein Druckrollengerüst, in dem die Trapezstreifen mittels einer Druckrolle in die Trapezsicken eingedrückt und fixiert werden.

Im Ergebnis wird eine funktionsgerechte und automatische Zuführung sowie Übergabe von ausgerichteten Trapezstreifen an Deckschichten mit Trapezsicken unter Zwischenschaltung eines maschinellen Wendevorganges für die nach dem Sägevorgang falsch liegenden Trapezsicken erreicht.

Im folgenden wird die Erfindung anhand einer lediglich ein Ausführungsbeispiel darstellenden Zeichnung näher erläutert; es zeigen:

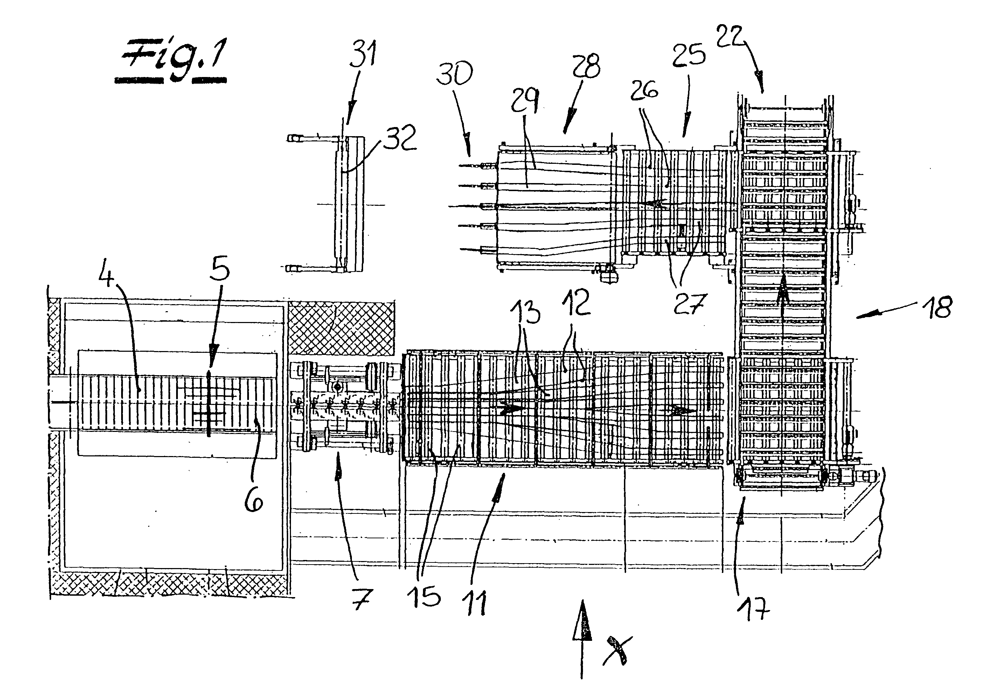

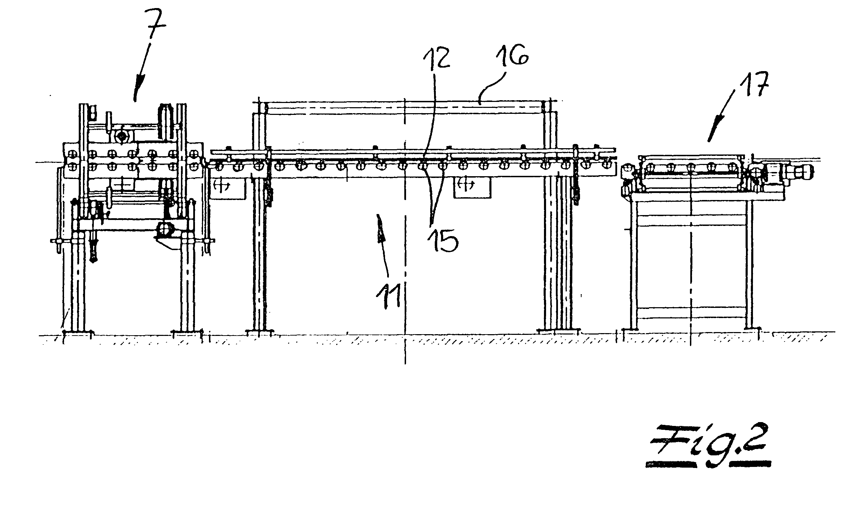

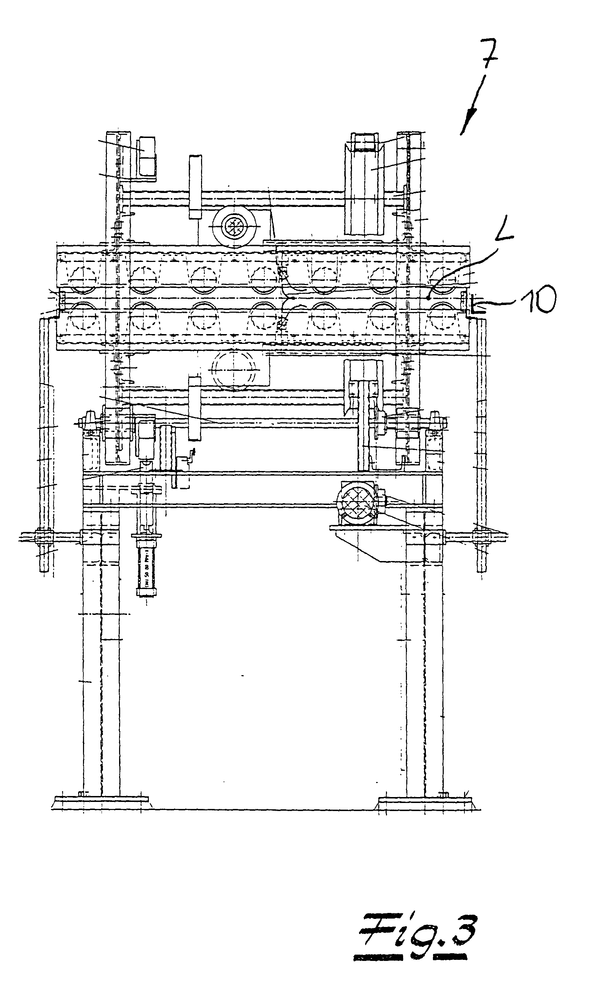

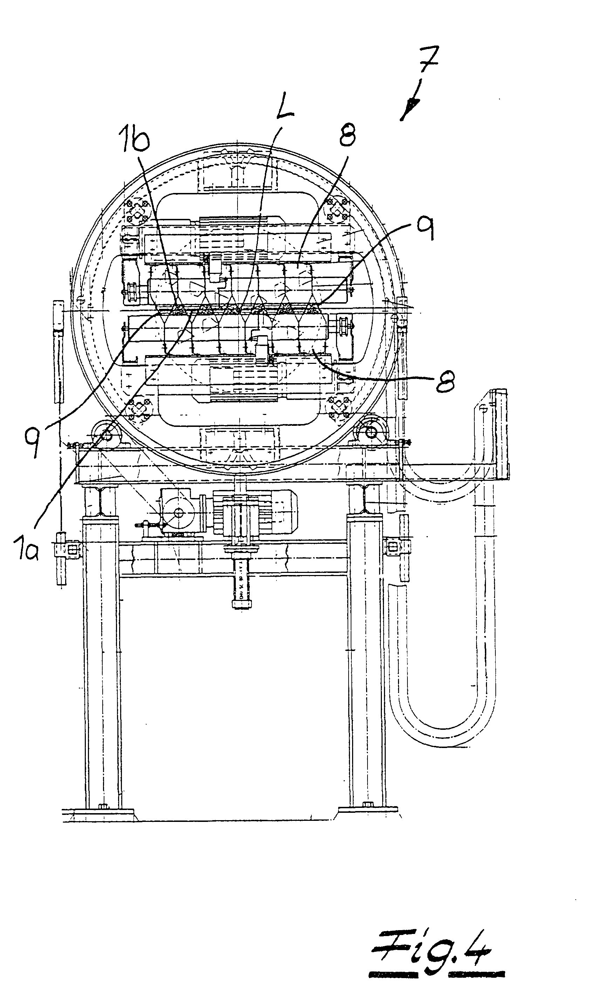

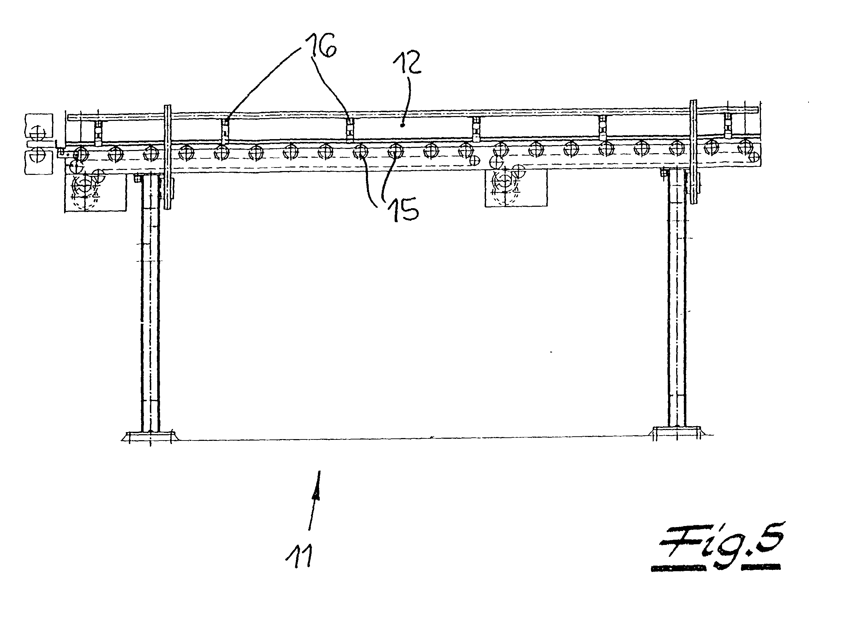

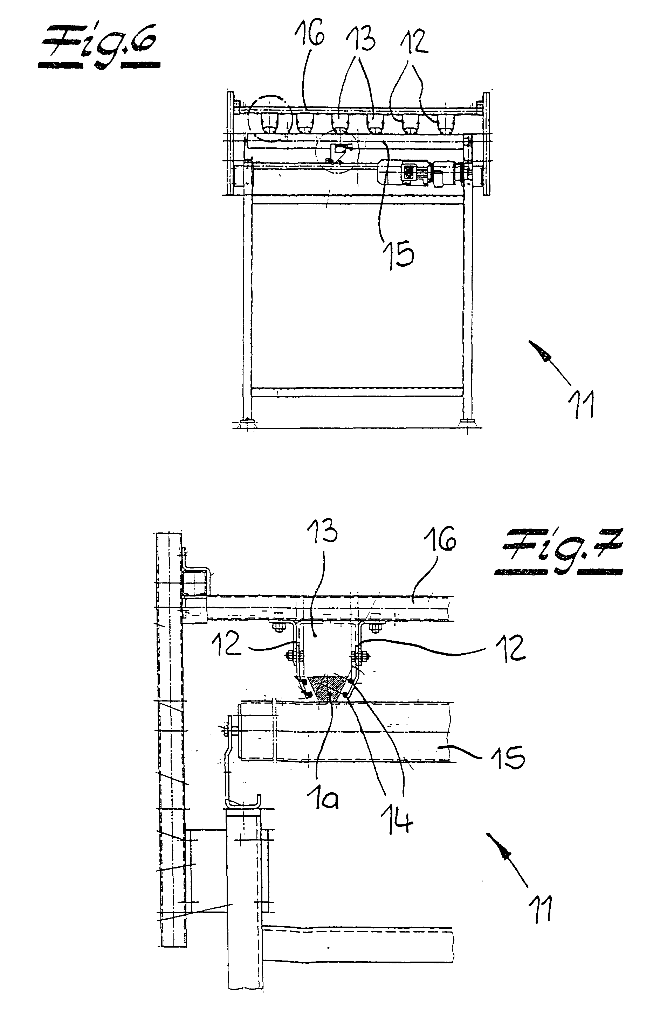

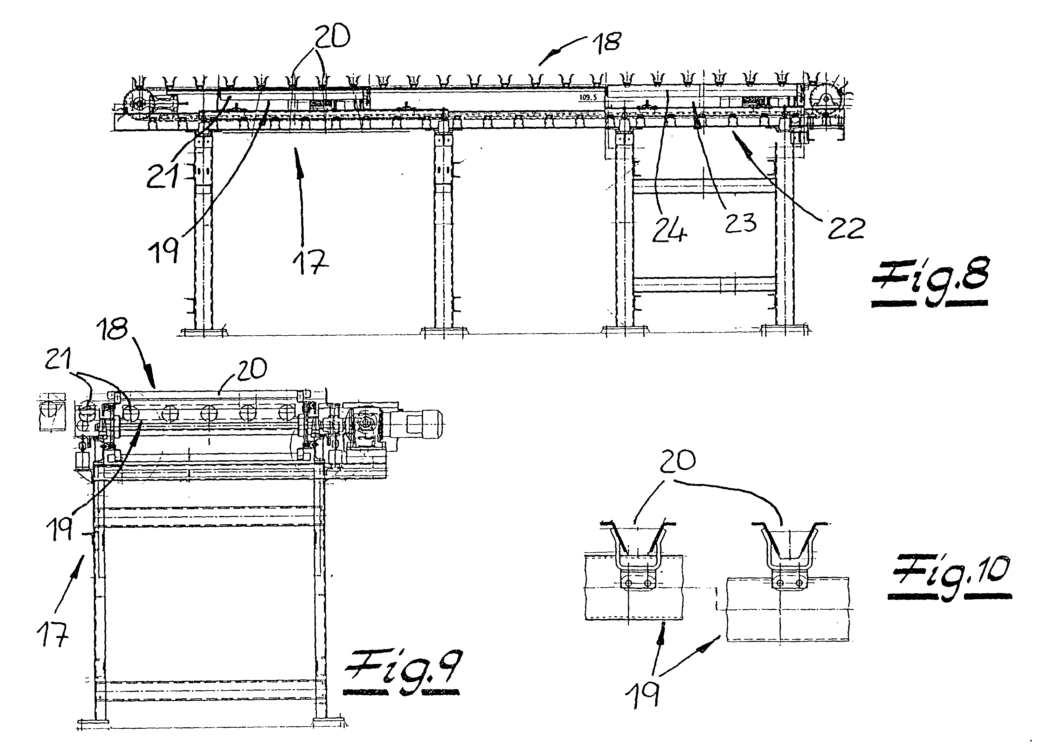

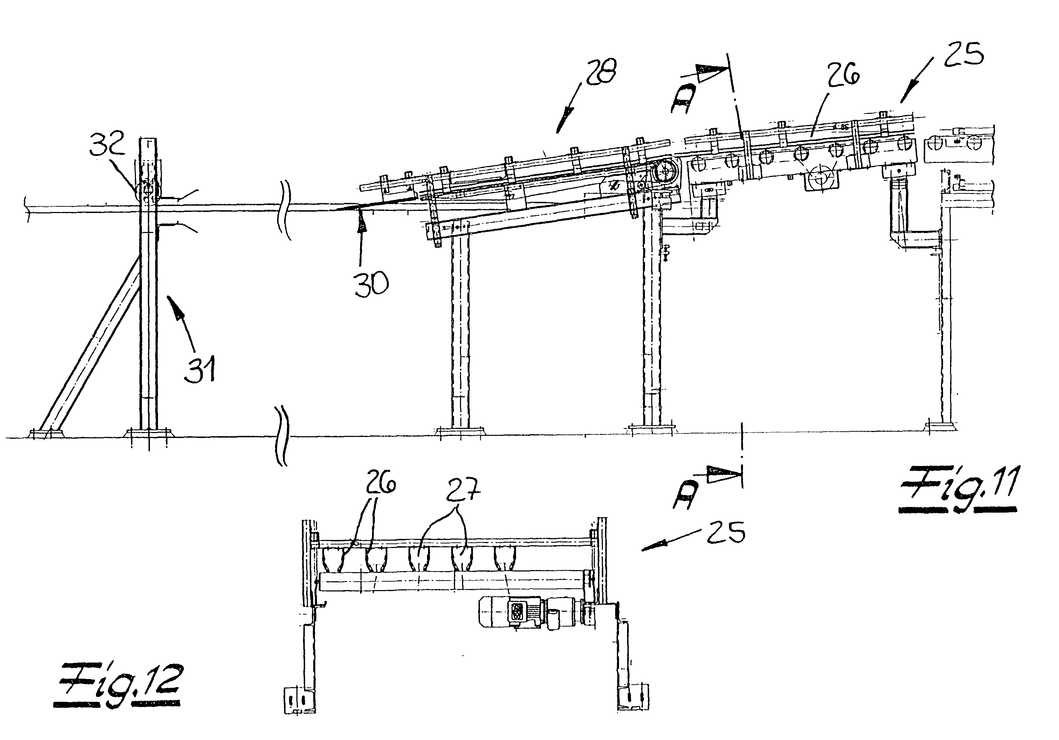

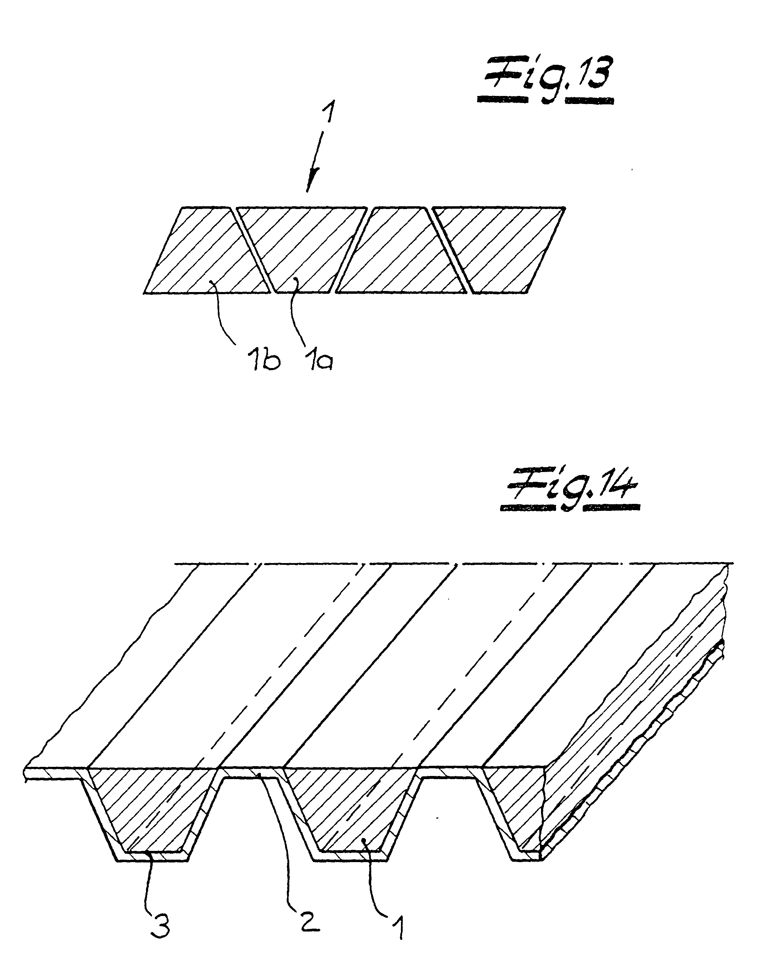

- Fig. 1: eine Anlage zum ausgerichteten Zuführen von Trapezstreifen in Draufsicht,
- Fig. 2: den Gegenstand nach Fig. 1 in Seitenansicht aus Richtung des Pfeiles X,
- Fig. 3: einen Trommelwender für den Gegenstand nach Fig. 1 in Seitenansicht,
- Fig. 4: den Gegenstand nach Fig. 1 in Stirnansicht,
- Fig. 5: einen dem Trommelwender nachgeschalteten Rollenförderer für den Gegenstand nach Fig. 1 in Seitenansicht,
- Fig. 6: den Gegenstand nach Fig. 5 in Stirnansicht,
- Fig. 7: einen Ausschnitt aus dem Gegenstand nach Fig. 6,
- Fig. 8: den Trogförderer mit den zugeordneten Hubrollenförderern für den Gegenstand nach Fig.1 in Seitenansicht,
- Fig. 9: den Gegenstand nach Fig. 8 in Stirnansicht,
- Fig. 10: einen Ausschnitt aus Fig. 8 mit links angehobenem Hubrollenförderer und rechts abgesenktem Hubförderer,
- Fig. 11: eine Seitenansicht auf den Einlegeförderer mit vorgeschaltetem Rollenförderer für den Gegenstand nach Fig. 1,
- Fig. 12: einen Schnitt A-A durch den Gegenstand nach Fig. 11,
- Fig. 13: ausschnittsweise und im Vertikalschnitt die Anordnung von Trapezstreifen nach dem Verlassen der Trapezsäge und
- Fig. 14: ausschnittsweise und in perspektivischer Darstellung eine Deckplatte mit Trapezsicken und eingelegten Trapezstreifen.

In den Figuren ist eine Anlage zum ausgerichteten Zuführen von Trapezstreifen 1 aus Dämmaterial im Zuge der Fertigung von Sandwichelementen dargestellt. Die Sandwichelemente weisen beidseitig Deckschichten 2 und einen Dämmaterialkern auf, wobei zumindest eine der beiden Deckschichten 2 Trapezsicken 3 zur Aufnahme der Trapezstreifen 1 aufweist.

Auf einer Auflagerollenbahn 4 mit einer Trapezsäge 5 werden Dämmaterialplatten in wechselweise mit ihrer Schmalseite nach unten (richtig) und ihrer Schmalseite nach oben (falsch) liegenden Trapezstreifen 1 geteilt. Nach dem Ausführungsbeipiel werden zwölf Trapezstreifen 1 geschnitten, von denen sechs Trapezstreifen 1 richtig und sechs Trapezstreifen 1 falsch liegen. In dieser Anordnung werden die Trapezstreifen 1 mittels eines Trapezstreifenförderers 6 einem Trommelwender 7 zugeführt, der taktweise antreibbar ist und in zwei Reihen übereinander und teilweise nebeneinander angeordnete Trapezfächer 8 mit wechselweise nach oben und unten ausgerichteten Trapezaufnahmen 9 für die antransportierten Trapezstreifen 1 aufweist. Die Trapezaufnahmen 9 sind in Trapezstreifenförderebene angeordnet. Den Trapezfächern 8 ist für die mit ihrer Schmalseite nach oben und folglich falsch liegenden Trapezstreifen 1b am Ausgang des um seine horizontale Längsachse L drehbar gelagerten Trommelwenders 7 ein entsprechender Anschlag 10 zugeordnet, so daß lediglich die richtig liegenden Trapezstreifen 1a den Trommelwender 7 durchlaufen und entsprechende Trapezausnehmungen in dem Anschlag 10 passieren können, während die falsch liegenden Trapezstreifen 1b von dem Anschlag 10 angehalten werden und erst nach einer 180°-Drehung des Trommelwenders 7 aus diesem durch die Trapezausnehmungen in dem Anschlag 10 hindurch abtransportiert werden können. Dem. Trommelwender 7 ist ein Rollenförderer 11 mit Leitflächen 12 zur Bildung von trapezförmigen Führungskanälen 13 für die richtig liegenden Trapezstreifen 1 nachgeordnet, welche die von dem Trommelwender 7 mit nach unten liegender Schmalseite kommenden' Trapezstreifen la auf ein vorgegebenes Rastermaß auseinanderführen. Die Führungskanäle 13 bzw. deren Leitflächen 12 sind breitenverstellbar und weisen innenseitig Führungsleisten 14 auf. Die Führungskanäle 13 nehmen die auf den Förderrollen 15 des Rollenförderers 11 aufliegenden Trapezstreifen 1 mit vorgegebenem Bewegungsspiel zwischen den Führungsleisten 14 auf. Die Führungskanäle 13 bzw. Leitflächen 12 sind an den Rollenförderer 11 überbrückenden Traversen 16 angeschlossen. Die Leitflächen 12 sind bis auf einen vorgegebenen Abstand gegen die Förderrollen 15 des Rollenförderers 11 zur Bildung einer Zwangsführung für die Trapezstreifen 1 abgewinkelt.

Dem Rollenförderer 11 ist eine Winkelstation 17 mit einem orthogonal zum Rollenförderer 11 angeordneten Trogförderer 18 nachgeordnet. Unterhalb des Trogförderers 18 ist ein Hubrollenförderer 19 mit gegen die trapezförmigen und bodenfreien Tröge 20 des Trogförderers 18 anhebbaren Förderrollen 21 angeordnet. Das Rastermaß der Führungskanäle 13 am Ende des Rollenförderers 11 ist durch die Trogabstände vorgegeben. Dadurch erfolgt eine einwandfreie Übergabe der Trapezstreifen 1 aus den Führungskanälen 13 in die entsprechende und taktweise vorgefahrene Anzahl der Tröge 20 des Trogförderers 18. Nach dem Ausführungsbeispiel wird der Trogförderer 18 derart taktweise angetrieben, daß sich stets sechs Tröge 20 zum Befüllen auf der Winkelstation 17 befinden.

Am Ende des Trogförderers 18 ist eine weitere Winkelstation 22 mit wiederum einem unterhalb des Trogförderers 18 angeordneten Hubrollenförderer 23 vorgesehen. Der Hubrollenförderer 23 hebt die Trapezstreifen 1 mit angehobenen Förderrollen 24 aus den oberhalb des Hubrollenförderers 23 befindlichen Trögen 20 des Trogförderers 18 aus und gibt die Trapezstreifen 1 an einen nachgeschalteten Rollenförderer 25 mit breitenverstellbaren Leitflächen 26 bzw. ebenfalls Führungskanälen 27 ab. Auch dieser Rollenförderer 25 ist orthogonal zum Trogförderer 18 angeordnet, wobei das Rastermaß der Führungskanäle 27 wiederum durch die Trogabstände vorgegeben ist.

An den Rollenförderer 25 schließt sich ein Einlegeförderer 28 mit Einlegekanälen 29 an, deren Rastermaß am Ende des Einlegeförderers 28 auf das Rastermaß der Trapezsicken 3 der jeweiligen antransportierten Deckschichten 2 einstellbar ist. Die Einlegekanäle 29 tauchen mit einer Übergaberinne 30 in die Trapezsicken 3 der Deckschichten 2 ein, so daß eine einwandfreie Übergabe der Trapezstreifen 1 in die Trapezsicken 3 ohne endseitiges Aufeinanderliegen sichergestellt ist. Der Rollenförderer 25 und der Einlegeförderer 28 sind mit vorgegebenen Neigungswinkeln gegen die unterhalb des Einlegeförderers 28 in dessen Förderrichtung antransportierten Deckschichten 2 geneigt. Die mit Trapezstreifen 1 gefüllten bzw. bestückten Deckschichten 2 durchlaufen ein Druckrollengerüst 31, wobei die Trapezstreifen 1 mittels einer Druckrolle 32 in die Trapezsicken 3 eingedrückt und fixiert werden.

Sämtliche Förderrollen bzw. Förderer sind wie der Trogförderer in Abstimmung aufeinander und folglich taktweise angetrieben.

## Patentansprüche

1. Anlage zum ausgerichteten Zuführen von Trapezstreifen aus Dämmaterial im Zuge der Fertigung von Sandwichelementen, insbesondere Wand- oder Deckenelementen, mit beidseitigen Deckschichten und einem Dämmaterialkern, wobei zumindest eine der beiden Deckschichten Trapezsicken zur Aufnahme der Trapezstreifen aufweist, mit einer Trapezsäge zum Teilen von Dämmaterialplatten in wechselweise mit ihrer Schmalseite nach unten und ihrer Schmalseite nach oben liegenden Trapezstreifen und mit einem Trapezstreifenförderer, **dadurch gekennzeichnet, daß** dem Trapezstreifenförderer (6) ein taktweise antreibbarer Trommelwender (7) mit nebeneinander angeordneten Trapezfächern (8) mit welchselweise nach oben und unten ausgerichteten Trapezaufnahmen (9) für die antransportierten Trapezstreifen (1) nachgeordnet ist, wobei die Trapezaufnahmen (9) in Trapezstreifenförderebene angeordnet sind und den Trapezfächern (8) für die mit ihrer Schmalseite nach oben liegenden Trapezstreifen (1b) am Ausgang des Trommelwenders (7) ein Anschlag (10) zugeordnet ist, und daß dem Trommelwender (7) ein Rollenförderer (11) mit Leitflächen (12) zur Bildung von trapezförmigen Führungskanälen (13) für die Trapezstreifen (1) nachgeordnet ist, welche die von dem Trommelwender (7) mit nach unten liegender Schmalseite kommenden Trapezstreifen (1a) auf ein vorgegebenes Rastermaß auseinanderführen.

2. Anlage nach Anspruch 1, **dadurch gekennzeichnet, daß** die Führungskanäle (13) bzw. deren Leitflächen (12) breitenverstellbar sind und innenseitige Führungselemente, z. B. Führungsbleche oder Führungsleisten (14) aufweisen.

3. Anlage nach Anspruch 1 oder 2, **dadurch gekennzeichnet, daß** die Führungskanäle (13) die auf Förderrollen (15) des Rollenförderers (11) aufliegenden Trapezstreifen (1) mit vorgegebenem Bewegungsspiel aufnehmen.

4. Anlage nach Anspruch 3, **dadurch gekennzeichnet, daß** die Führungskanäle (13) bzw. Leitflächen (12) an den Rollenförderer (11) überbrückenden Traversen (16) angeschlossen sind und die Leitflächen (12) bis auf einen vorgegebenen Abstand gegen die Förderrollen (15) des Rollenförderers (11) abgewinkelt sind.

5. Anlage nach einem der Ansprüche 1 bis 4, **dadurch gekennzeichnet, daß** dem Rollenförderer (11) eine Winkelstation (17) mit einem orthogonal zum Rollenförderer (11) angeordneten Trogförderer (18) nachgeordnet ist, daß unterhalb des Trogförderers (18) ein Hubrollenförderer (19) mit gegen die trapezförmigen und bodenfreien Tröge (20) des Trogförderers (18) anhebbaren Förderrollen (21) angeordnet ist, und daß das Rastermaß der Führungskanäle (13) am Ende des Rollenförderers (11) durch die Trogabstände vorgegeben ist und dadurch eine Übergabe der Trapezstreifen (1) aus den Führungskanälen (13) in die entsprechende und taktweise vorgefahrene Anzahl der Tröge (20) des Trogförderers (18) erfolgt.

6. Anlage nach Anspruch 5, **dadurch gekennzeichnet, daß** am Ende des Trogförderers (18) eine weitere Winkelstation (22) mit einem unterhalb des Trogförderers (18) angeordneten Hubrollenförderer (23) vorgesehen ist, und daß der Hubrollenförderer (23) die Trapezstreifen (1) mit angehobenen Förderrollen (24) aus den oberhalb des Hubrollenförderers (23) befindlichen Trögen (20) des Trogförderers (18) aushebt und an einen nachgeschalteten Rollenförderer (25) mit breitenverstellbaren Leitflächen (26) bzw. Führungskanälen (27) abgibt.

7. Anlage nach Anspruch 6, **dadurch gekennzeichnet, daß** der Rollenförderer (25) orthogonal zum Trogförderer (18) angeordnet ist und das Rastermaß der Führungskanäle (27) durch die Trogabstände vorgegeben ist.

8. Anlage nach Anspruch 6 oder 7, dadurch gekenzeichnet, daß sich an den Rollenförderer (25) ein Einlegeförderer (28) mit Einlegekanälen (29) anschließt, deren Rastermaß am Ende des Einlegeförderers (28) auf das Rastermaß der Trapezsicken (3) der jeweiligen Deckschichten (2) einstellbar ist und daß die Einlegekanäle (29) mit einer Übergaberinne (30) in die Trapezsicken (3) der Deckschichten (2) eintauchen.

9. Anlage nach Anspruch 8, **dadurch gekennzeichnet, daß** zumindest der Einlegeförderer (28) mit einem vorgegebenen Neigungswinkel gegen die unterhalb des Einlegeförderers (28) in dessen Förderrichtung antransportierten Deckschichten (2) geneigt ist.

## Claims

1. An installation for the aligned feeding of trapezoidal strips of insulating material in the course manufacturing sandwich elements, particularly wall or ceiling elements, which comprise facings on both sides and a core of insulating material, wherein at least one of the two facings comprises trapezoidal channels for receiving the trapezoidal strips, comprising a trapeze saw for separating insulating material panels alternately with their narrow faces at the bottom and their narrow faces at the top, and comprising a trapezoidal strip conveyor, **characterised in that** a drum-type turning device (7) which can be driven in cycles and which comprises trapezoidal compartments (8) disposed side by side, with trapezoidal receivers (9) for the trapezoidal strips (1) which are fed thereto and which are aligned facing upwards and downwards alternately, is disposed downstream of the trapezoidal strip conveyor (6), wherein the trapezoidal receivers (9) are disposed in the plane of conveying of the trapezoidal strips, and a stop (10) at the outlet of the drum-type turning device is associated with the trapezoidal compartments (8) for the trapezoidal strips (1b) which are situated with their narrow faces at the top, and that a roller conveyor (11) having guide faces (12) for forming trapezoidal guide channels (13) for the trapezoidal strips (1) is disposed downstream of the drum-type turning device (7), which guide channels move apart, by a predetermined modular spacing, the trapezoidal strips (1a) which come from the drum-type turning device (7) with their narrow faces at the bottom.

2. An installation according to claim 1, **characterised in that** the width of the guide channels (13) or the guide faces (12) thereof is adjustable, and said guide channels or guide faces comprise guide elements, e.g. guide plates or guide strips (14) in their interiors.

3. An installation according to claims 1 or 2, **characterised in that** the guide channels (13) receive the trapezoidal strips (1), which are resting on conveyor rollers (15) of the roller conveyor (11), with a predetermined motional clearance.

4. An installation according to claim 3, **characterised in that** the guide channels (13) or guide faces (12) are attached to rails (16) which bridge the roller conveyor (11), and the guide faces (12) are angled, except for a predetermined distance, towards the conveyor rollers (15) of the roller conveyor (11).

5. An installation according to any one of claims I to 4, **characterised in that** an angle station (17), which comprises a trough conveyor (18) which is disposed orthogonally to the roller conveyor (11), is disposed downstream of the roller conveyor (11), that a lifting roller conveyor (19) which comprises conveyor rollers (21) which can be raised towards the trapezoidal, bottomless troughs (20) of the trough conveyor (18) is disposed underneath the trough conveyor (18), and that the modular spacing of the guide channels (13) at the end of the roller conveyor (11) is predetermined by the trough spacings, and transfer of the trapezoidal strips (1) is thereby effected from the guide channels (13) into a corresponding number of troughs (20) of the trough conveyor (18) which are advanced in cycles.

6. An installation according to claim 5, **characterised in that** a further angle station (22), which comprises a lifting roller conveyor (23) disposed underneath the trough conveyor (18), is provided at the end of the trough conveyor (18), and that the lifting roller conveyor (23) raises the trapezoidal strips (1) by means of its raised conveyor rollers (24) from the troughs of the trough conveyor (18 ) situated above the lifting roller conveyor (3) and discharges them on to a downstream roller conveyor (25) which comprises guide faces (26) or guide channels (27) of adjustable width.

7. An installation according to claim 6, **characterised in that** the roller conveyor (25) is disposed orthogonally to the trough conveyor (18), and the modular spacing of the guide channels (27) is predetermined by the trough spacings.

8. An installation according to claims 6 or 7, **characterised in that** a loading conveyor (28) comprising loading channels (29) adjoins the roller conveyor (25), the modular spacing of which loading channels can be adjusted at the end of the loading conveyor (28) to the modular spacing of the trapezoidal channels (3) in the respective facings (2), and that a transfer channel (13) of the loading channels (29) enters the trapezoidal channels (3) of the facings (2).

9. An installation according to claim 8, **characterised in that** at least the loading conveyor (28) is inclined at a predetermined angle of inclination in relation to the facings (2) which are advanced underneath the loading conveyor (28) in the direction of conveying thereof.

## Revendications

1. Installation pour amener, au cours de la fabrication d'éléments en sandwich, de façon dirigée des bandes de trapèzes en maitière isolante, notamment des éléments de paroi et de plafond avec des deux côtés des couches de recouvrement et avec un noyau en matière isolante, au moins une des couches de recouvrement présentant des moulures en forme de trapèze pour recevoir les bandes de trapèze; avec une scie de trapèze pour séparer des plaques en matière isolante en bandes de trapèzes avec tour à tour leur côté étroit orienté vers le bas et vers le haut ; et avec un convoyeur de bandes de trapèzes, **caractérisé en ce qu'**au convoyeur de bandes de trapèzes (6) est subordonné un inverseur à tambour (7), qui est susceptible d'être entrainé de façon cadencée et qui est pourvu de compartiments (8) pour les trapèzes avec des réceptacles pour les trapèzes , les réceptacles étant orientés tour à tour vers le haut et vers le bas pour recevoir les bandes de trapèzes qui arrivent, les réceptacles (9) pour les trapèzes étant disposés dans des plans de transport de trapèzes et à la sortie de l'inverseur à tambour (9) une butée (10) est associé aux compartiments pour les trapèzes (8) pour les bandes de trapèzes (1b) étant disposées avec leurs côtés étroits vers le haut,
**et en ce qu'** à l'inverseur à tambour (7) est subordonné un convoyeur à rouleaux (11) avec des surfaces de guidage (12) pour former des canaux de guidage (13) en forme de trapèze pour les bandes de trapèzes (1), les canaux distribuent les bandes de trapèzes (1a), venant de l'inverseur à tambour (7) avec leur côté étroit vers le bas, sur des dimensions de grille prédéterminées.

2. Installation selon la revendication 1, **caractérisé en ce que** les canaux de guidage (13) et leurs surfaces de guidage (12) sont réglables en largeur et **en ce qu**'ils comprennent des éléments de guidage internes , par exemple des tôles de guidage ou des baguettes de guidages (14).

3. Installation selon la revendication 1 ou la revendication 2, **caractérisé en ce que** les canaux de guidage (13) recoivent les bandes de trapèze (1), reposants sur des rouleaux convoyeur (15) du convoyeur à rouleaux (11), avec un jeu de mouvement prédéterminé.

4. Installation selon la revendication 3, **caractérisé en ce que** les canaux de guidage (13) ou surfaces de guidage (12) sont connectées aux traverses qui traversent les convoyeurs à rouleaux (11) **et en ce que** les surfaces de guidage (12) sont déroulées jusquà une distance prédéterminée contre les rouleaux du convoyeur (15) du convoyeur à rouleaux (11).

5. Installation selon une des revendications 1 à 4, **caractérisé en ce qu**'au convoyeur à rouleaux (11) est subordonné une station à angle (1 7) avec un convoyeur à cuve (18), qui est disposé de façon perpendiculaire par rapport au convoyeur à rouleaux , **en ce qu**'en dessous du convoyeur à cuve (18) est disposé un convoyeur élévateur à rouleaux (19) avec des rouleaux convoyeur (21), qui sont susceptibles d'être levés contre les cuves (20) sans fond en forme de trapèze, et en ce que les dimensions de grille des canaux de guidage (13) sont prédéterminées à l'extrémité du convoyeur à rouleaux (11) par les distances entre les cuves, ce qui a pour conséquence que les bandes de trapèzes (1) sont transmises de l'intérieur des canaux de guidage (13) dans les cuves (20), d'un nombre correspondant et transporté en face, du convoyeur à cuve (18).

6. Installation selon la revendication 5, **caractérisé en ce qu'**il est prévu à l'extrémité du convoyeur à cuve (18) une autre station à angle (22) avec un convoyeur élévateur à rouleaux (23) disposé en dessous du convoyeur à cuve (18), **et en ce que** le convoyeur élévateur de rouleaux (23) lève les bandes de trapèze, avec les rouleaux convoyeurs levés, des cuves (20) du conveyeur à cuve (18) qui se trouvent au dessus du convoyeur élévateur à rouleaux (23), et les transmet à un convoyeur à rouleaux subordonné (25) avec des surfaces de guidage réglables en largeur (26) ou des canaux de guidage (27).

7. Installation selon la revendication 6, **caractérisé en ce que** le convoyeur à rouleaux (25) est disposé de manière perpendiculaire par rapport au convoyeur à rouleaux (18) et **en ce que** les dimensions de grille des canaux de guidage (27) sont prédéterminées par la distance entre les cuves.

8. Installation selon la revendication 6 ou la revendication 7, **caractérisé en ce qu'**au convoyeur à rouleaux (25) est connecté un convoyeur de chargement (28) avec des canaux de chargement (29) dont les dimensions de grille sont règlables à l'extrémité du convoyeur de chargement (28) sur les dimensions de grille des moulures en forme de trapèze des couches de recouvrement (2) respectives et **en ce que** les canaux de chargement (29) plongent par l'intermédiaire d'une rainure de transmission (30) dans les moulures en forme de trapèze (3) des couches de recouvrement (2).

9. Installation selon la revendication 8, **caractérisé en ce qu**'au moins le convoyeur de chargement (28) est incliné avec un angle d'inclinaison prédéterminé contre les couches de recouvrement (2) transporté en dessous du convoyeur de chargement (28) en direction de sa direction de transport.
